# EUROPÄISCHE PATENTSCHRIFT

(11) **EP 1 892 396 B1**
(45) Veröffentlichungstag und Bekanntmachung des Hinweises auf die Patenterteilung: **24.06.2009**
(21) Anmeldenummer: 07013047.1
(22) Anmeldetag: 04.07.2007
(51) Int. Cl.: F01N 3/035, F01N 3/20

(54) **Abgasnachbehandlungssystem**
Exhaust gas treatment system
Système de traitement de gaz d'échappement

(30) Priorität: 16.08.2006 DE 102006038288
(43) Veröffentlichungstag der Anmeldung: 27.02.2008
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- DE-A1- 10 323 607
- DE-A1- 10 335 785
- JP-A- 2004 060 494
- JP-A- 2006 183 507

## Beschreibung

Gegenstand der Erfindung ist ein Abgasnachbehandlungssystem bei mit Luftüberschuss betriebenen Brennkraftmaschinen, wie Dieselmotoren und Benzinmotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

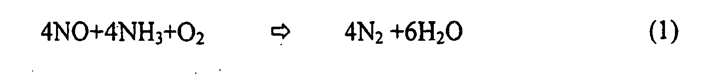

Wird den SCR-Katalysatoren ein platinhaltiger NO-Oxidationskatalysator zur Bildung von NO₂ vorgeschaltet

2NO+O₂⇔2NO₂ (2)

so kann die SCR-Reaktion erheblich beschleunigt und die Tieftemperaturaktivität merklich angehoben werden.

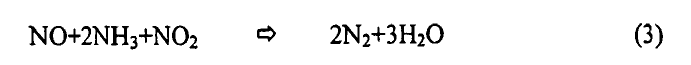

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch

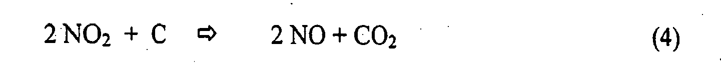

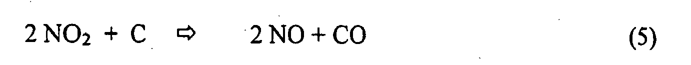

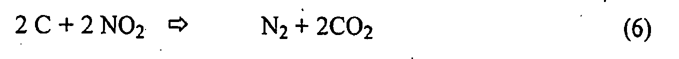

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach 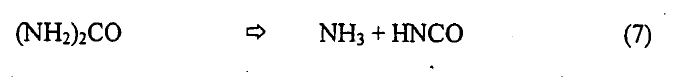 erfolgt zunächst die Thermolyse, d. h. die thermische Zersetzung von Harnstoff. Anschließend erfolgt nach 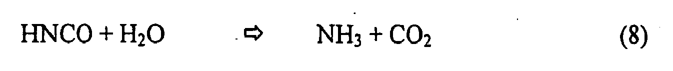 die Hydrolyse, also die katalytische Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß 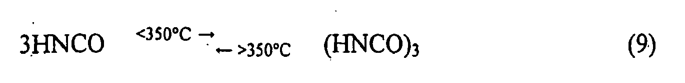 entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Um eine Kombination aus Partikelfilter, Hydrolysekatalysator und SCR-Katalysator bezüglich der Baugröße möglichst klein zu halten, ist es aus der JP 2006 183507 A bekannt, einen Filter des Wall-Flow-Typs zur Partikelreduktion auf seiner Anströmseite mit einem Hydrolysekatalysatormaterial und auf seiner Abströmseite mit einem SCR-Katalysatormaterial zu beschichten. Bei derartigen Anordnungen besteht das Problem, dass es durch die Notwendigkeit des Abbrennens der auf der Anströmseite des Filters angesammelten Partikel, z.B. durch zyklische Regeneration des Partikelfilters, zu einem erhöhten Wärmeeintrag kommt, was wiederum die SCR-aktive Beschichtung auf der Abströmseite schädigen kann.

Ausgehend vom vorstehend beschriebenen Stand der Technik ist es Aufgabe der Erfindung unter Vermeidung der Nachteile bekannter Anordnungen ein Abgasnachbehandlungssystem zur Stickoxid- und Partikelreduzierung bei mit Luftüberschuss betriebenen Brennkraftmaschinen anzugeben, das sowohl die Partikelemission als auch die Stickoxidemission reduziert, durch die Zusammenfassung von Komponenten und Funktionen in der Baugröße minimiert ist und das eine hohe thermische Stabilität der SCR-aktven Schicht aufweist.

Gelöst wird die Aufgabe durch ein Abgasnachbehandlungssystem gemäß dem Kennzeichen des Anspruches 1, vorteilhafte Weiterbildungen des Abgasnachbehandlungssystem sind in den abhängigen Ansprüchen gekennzeichnet.

Bei der Lösung der Aufgabe wurde davon ausgegangen, dass zur Erreichung der geforderten Abgasgrenzwerte die Stickoxidreduzierung durch einen SCR-Katalysators mit Hilfe von Ammoniak erfolgt und die Partikelreduktion mittels eines Partikelfilters bewerkstelligt wird. Das erfindungsgemäße Abgasnachbehandlungssystem sieht im Abgasstrom der Brennkraftmaschine einen Partikelfilter vor, bei dem es sich um einen Oberflächenpartikelfilter oder einen Tiefenfilter handelt. Zur Durchführung der selektiven katalytischen Reduktion der Stickoxide ist der Partikelfilter auf seiner Abströmseite mit einem SCR-aktiven Katalysatormaterial beladen, derart, dass die Beladung mit dem SCR-aktiven Katalysatormaterial (6, 14) auf der Abströmseite des Partikelfilters in Strömungsrichtung das Abgases zunimmt.

Erreicht werden kann die entsprechende Verteilung des SCR-aktiven Materials dadurch, dass der Partikelfilter in Schichten aufgebaut ist, wobei die abströmseitigen Schichten eine in Strömungsrichtung des Abgases ansteigende Beladung mit dem SCR-aktiven Material aufweisen. Es ist natürlich auch möglich die Beladung mit dem SCR-aktiven Material durch Beschichten oder Imprägnieren der Abströmseite des Partikelfilters so vorzunehmen, dass der Grad der Beladung des Filtermaterials mit steigender Eindringtiefe der Beschichtungs- oder Imprägnierlösung abnimmt. Das SCR-aktive Katalysatormaterial, mit dem der Partikelfilter beladen ist, kann als Aktivkomponente Vanadium und/oder V₂O₅ und/oder und/oder WO₃/TiO₂ und/oder eisenhaltige Zeolithe und/oder kupferhaltige Zeolithe und/oder kobalthaltige Zeolithe enthalten.

Die für die Erzeugung des Ammoniak notwendige Zuführung eines ammoniakabspaltenden Reduktionsmittels oder von Ammoniak erfolgt stromauf zum Partikelfilter. Der Vorteil einer solchen Anordnung besteht einerseits in der minimierten Baugröße und damit dem minimierten Platzbedarf beim Einbau des Systems in ein Fahrzeug, andererseits wird durch das Filtermaterial des Partikelfilters ein ausreichender Abstand zwischen der auf der Anströmseite des Partikelfilters stattfindenden, exotherm ablaufenden Oxidation der angesammelten Rußpartikel und der auf der Abströmseite vorgesehenen Beladung des Partikelfilters mit SCR-aktiven Katalysatormaterial geschaffen. Die bei der Oxidation der Rußpartikel entstehenden hohen Temperaturen können dem SCR-aktiven Katalysatormaterial damit nicht schaden.

Als Material für den Partikelfilter eignen sich im Hinblick auf die Beladung mit SCR-aktivem Katalysatormaterial in vorteilhafter Weise Cordierit oder Siliziumcarbid oder Sintermetall oder keramische Fasern oder Silikatfasern oder Metallgestricke.

Um die Abspaltung von Ammoniak aus dem Reduktionsmittel zu begünstigen, ist es weiter von Vorteil, den Partikelfilter zusätzlich auf der Anströmseite mit einem entsprechend aktiven Katalysatormaterial zu beschichten oder zu imprägnieren. Als Aktivkomponente für ein solches Katalysatormaterial kommen TiO₂ und/oder TiO₂/SiO₂ und/oder TiO₂/SiO₂/Al₂O₃ und/oder Zeolithe in Frage.

Um zu vermeiden, dass bei der SCR-Reaktion eventuell unverbrauchtes NH₃ in die Umwelt gelangt, ist es von Vorteil, den Partikelfilter zusätzlich auf der Abströmseite, in Strömungsrichtung des Abgases gesehen am Ende der Beladung mit SCR-aktivem Katalysatormaterial, mit einem Katalysatormaterial zu beschichten oder zu imprägnieren, das im Abgas vorhandenen überschüssigen Ammoniak oxidiert. Das hierfür geeignete Katalysatormaterial zur Oxidation von überschüssigem Ammoniak kann als Aktivkomponente Elemente der Platingruppe und/ oder deren Oxide und/ oder Zeolithe enthalten.

Weiter ist es vorteilhaft, stromauf zur Zuführung des Reduktionsmittels einen Oxidationskatalysator anzuordnen, der zumindest einen Teil des im Abgasstrom enthaltenen Stickstoffmonoxids in Stickstoffdioxid überführt. Durch diese Maßnahme wird eine kontinuierliche Oxidation der am Partikelfilter angelagerten Rußpartikel nach den Gleichungen 4 bis 6 möglich, wobei das Temperaturniveau niedriger ist, als bei einer zyklischen Regeneration des Partikelfilters durch z.B. anfetten des Verbrennungsgemisches oder durch Zugabe von Kohlenwasserstoffen in das heiße Abgas. Als Aktivmaterial für den Oxidationskatalysator zur Überführung von Stickstoffmonoxid in Stickstoffdioxid sind Platin und/ oder Platinoxid und/ oder Zeolithe geeignet.

In Verbindung mit dem vorstehend gesagten wird der Vorteil des erfindungsgemäßen Abgasnachbehandlungssystems besonders deutlich: Würde der gesamte Partikelfilter und somit auch dessen Anströmseite mit SCR-aktiver Beschichtung versehen, würde dies gemäß Gleichung 3 zu einer starken Absenkung der NO₂-Konzentration auf der Anströmseite führen, wodurch die Oxidation des dort abgeschiedenen Rußes und damit die Filterregeneration mit Hilfe NO₂ erheblich verschlechtert würde.

Eine besonders günstige und damit vorteilhafte Ausführungsform des Partikelfilter sieht vor, dass dieser sowohl auf seiner Anströmseite als auch auf seiner Abströmseite sacklochartige oder taschenförmige Kammern ausbildet, wobei die auf der Anströmseite gelegenen zur Anströmseite hin und die auf der Abströmseite gelegenen zur Abströmseite hin offen sind.

Nachfolgend wird die Erfindung mit Hilfe der Zeichnungen anhand einiger Beispiele näher erläutert, es zeigen:
- Fig. 1: Ein schematische Darstellung eines Abgasnachbehandlungssystems
- Fig. 2: Eine Kombination aus Partikelfilter und SCR-Katalysator in schematischer Darstellung
- Fig. 3: Eine Kombination aus Partikelfilter, SCR-Katalysator und NH₃-Oxidationskatalysator in schematischer Darstellung
- Fig. 4: Eine Kombination aus Partikelfilter, SCR-Katalysator und Hydrolysekatalysator in schematischer Darstellung
- Fig. 5: Eine Kombination aus Partikelfilter und SCR-Katalysator im Abgastrakt einer Brennkraftmaschine in schematischer Darstellung

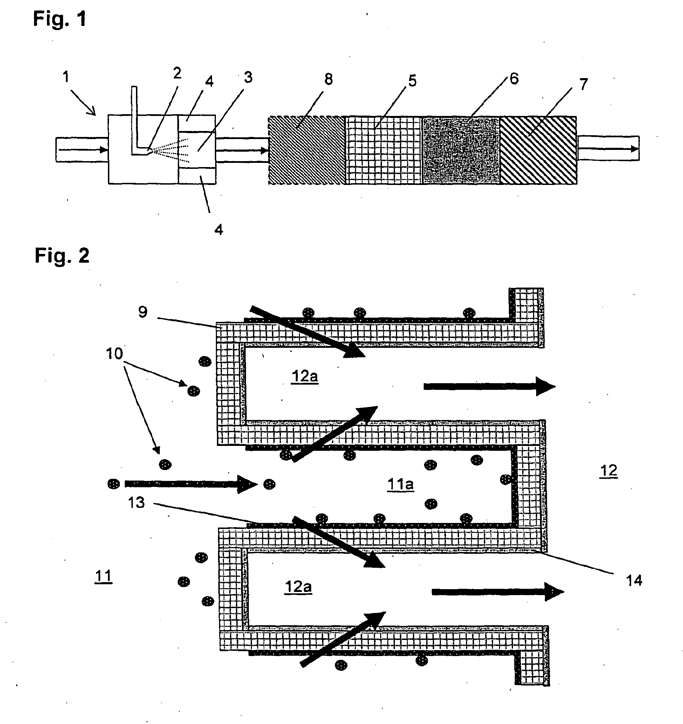

Ein Abgasnachbehandlungssystem zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motomah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung in einen Abgasteilstrom 3 eingesprüht wird. Parallel zum Abgasteilstrom 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Reduktion der Feststoffpartikel und andererseits bei der nachgeordneten SCR-Reaktion, wie dies nachfolgend noch näher beschrieben ist.

Stromab zum Abgasteilstrom 3 und dem parallel zu diesem angeordneten Oxidationskatalysator 4 ist ein Partikelfilter 5 angeordnet, der die im Abgas befindlichen Rußpatikel anlagert. Die so im Partikelfilter 5 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelfilter 5 entfallen.

Die eigentliche selektive katalytische Reduktion der Stickoxide erfolgt durch einen SCR-Katalysator 6, der in Figur 1 der Einfachheit halber zwar schematisch als separates Bauteil eingezeichnet ist, aber, wie weiter unten beschrieben, erfindungsgemäß als SCR-aktive Beschichtung des Partikelfilters 5 ausgeführt ist. In der angesprochenen Reduktionsreaktion soll ein möglichst großer Anteil der im Abgas vorhandenen Stickoxide (NO_{X}), bei gleichzeitiger hoher Selektivität der Reduktion, in Stickstoff und Wasserdampf übergeführt werden, ohne dass überschüssiger Ammoniak (NH₃) im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene NO, es ist demnach wünschenswert, den Oxidationskatalysator 4 so auszulegen, dass ein möglichst hoher Anteil an Stickstoffmonoxid in Stickstoffdioxid übergeführt wird, also nach Möglichkeit mehr als zur Umsetzung der Rußpartikel im Partikelabscheider nötig ist. Durch die stark exotherme Rußoxidation kann es zu einem deutlichen Temperaturanstieg kommen, so dass stromab des Partikelabscheiders durchaus Temperaturen oberhalb von 650°C, die zu einer Schädigung V₂O₅-haltiger SCR-Katatalysatoren führen, auftreten können. Aus diesem Grund kann der Einsatz von V₂O₅-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 7 nachgeordnet, mit dem das überschüssige NH₃ in Stickstoff und Wasserdampf übergeführt wird. Der NH₃-Oxidationskatalysator 7, in Figur 1 ebenfalls schematisch durch ein separates Bauteil eingezeichnet, kann, wie weiter unten gezeigt, ebenfalls Teil der Kombination aus Partikelfilter 5 und SCR-Katalysator sein. Die Oxidationsreaktion zur Beseitigung des überschüssigen Ammoniaks sollte möglichst selektiv ablaufen, so dass zumindest Anteile von Iridium oder Iridiumoxid als Aktivmaterial für den NH₃-Oxidationskatalysator 7 verwendet werden sollten.

Wie in Figur 1 weiter mit gestrichelter Umfangslinie eingezeichnet, kann zur Verbesserung der Abspaltung des Ammoniaks aus dem Reduktionsmittel ein Hydrolysekatalysator 8 zum Einsatz kommen, wenn das Temperaturniveau an der Zuführstelle für das Reduktionsmittel nicht hoch genug ist. Dieser Hydrolysekatalysator 8, im Abgasstrom stromab zur Zuführstelle des Reduktionsmittels und stromauf zum Partikelfilter 5 angeordnet, ist in der Zeichnung zwar ebenfalls schematisch als separates Bauteil eingezeichnet, kann aber, wie weiter unten gezeigt, auch eine Beladung auf der Anströmseite des Partikelfilters 5 mit entsprechend aktivem Katalysatormaterial sein.

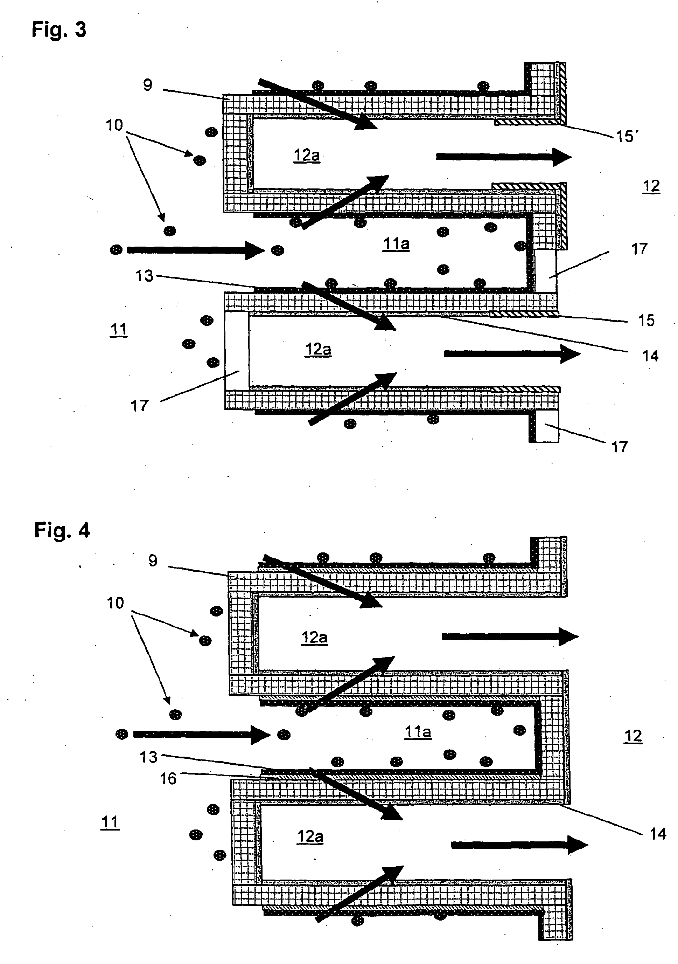

Die Ausführung eines Partikelfilters mit SCR-Aktivität zeigt Fig. 2, ebenfalls schematisch, in Schnittdarstellung, wobei die Schnittebene parallel zur Strömungsrichtung des Abgases gewählt ist. Die Strömungsrichtung ist dabei, ebenso wie in den weiter unten beschriebenen Figuren 3 bis 5 durch Pfeile veranschaulicht.

Der Partikelfilter 9 weist sowohl auf seiner Anströmseite 11 als auch auf seiner Abströmseite 12 sacklochartige oder taschenförmige Kammern 11a, 12a auf, wobei die auf der Anströmseite 11 gelegenen zur Anströmseite 11 hin und die auf der Abströmseite 12 gelegenen zur Abströmseite 12 hin offen sind. Als Filtermaterial für den Partikelfilter 9 können Cordierit oder Siliziumcarbid aber auch Sintermetall oder keramischen Fasern sowie Silikatfasern oder Metallgestricke eingesetzt werden.

Wie in der Darstellung erkennbar, trifft der mit Rußpartikeln 10 und mit Ammoniak (NH₃) (nicht dargestellt) beladene Abgasstrom auf die Anströmseite 11 des Partikelfilters 9 und lagert die Rußpartikel 10 insbesondere in den sacklochartigen oder taschenförmigen Kammern 11a als sogenannten Filterkuchen 13 an, bevor das so von Rußpartikeln 10 gereinigte Abgas durch das Filtermaterial auf die sackloch- oder taschenartigenartigen Kammern 12a der Abströmseite 12 zuströmt. Vor dem Erreichen der Kammern 12a durchströmt das mit NH₃ beladene Abgas eine auf der Abströmseite 12 gelegene, mit SCR-aktivem Katalysatormaterial 14 beladene Schicht des Partikelfilters 9 und bleibt mit dieser in Kontakt, bis es aus den sacklochartigen oder taschenförmigen Kammern 12a ausströmt. Auf dem Weg durch die mit SCR-aktivem Katalysatormaterial 14 beladene Schicht, sowie in den Kammern 12a, findet die selektive katalytische Reduktion nach den Reaktionen (1) und (2) statt, in der die Stickoxide in Stickstoff und Wasserdampf übergeführt werden. Das so von Rußpartikeln und Stickoxiden gereinigte Abgas verlässt auf der Abströmseite 12 die Filteranordnung.

Zur Regenerierung des Partikelfilters 9 muss der Filterkuchen 13 entweder kontinuierlich oder zyklisch entfernt werden. Die kontinuierliche Entfernung des Filterkuchens 13 wird, wie bereits zu Figur 1 beschrieben, dadurch bewerkstelligt, das dem Partikelfilter 9 ein in Figur 2 nicht dargestellter Oxidationskatalysator vorgeschaltet ist, der nach Reaktion (2) zumindest einen Teil des im Abgas vorhandenen Stickstoffmonoxids in Stickstoffdioxid überführt. Der Oxidationskatalysator muss auch stromauf zu der Stelle liegen, an der das Reduktionsmittel dem Abgasstrom beigegeben wird, da sonst das Reduktionsmittel oxidiert und damit für die SCR-Reaktion unbrauchbar würde.

Das im Abgas angereicherte Stickstoffdioxid bewirkt im Kontakt mit dem Filterkuchen 13 nach den Reaktionen (4), (5) und (6) eine Umsetzung der Rußpartikel 10 zu CO, CO₂, N₂ und NO, wobei diese Reaktionen kontinuierlich ablaufen, so dass der Filterkuchen auf einer im wesentlichen konstanten Dicke und der durch diesen verursachte Abgasgegendruck auf einem im wesentlichen konstanten Niveau gehalten werden kann.

Alternativ zu der kontinuierlichen Regenerierung des Partikelfilters 13 besteht auch die Möglichkeit, diesen zyklisch zu regenerieren. Dazu wird in bekannter Weise der Gehalt an Kohlenwasserstoffen im Abgas erhöht, sodass diese im Kontakt mit dem Filterkuchen die Rußpartikel 10 in einer stark exothermen Reaktion oxidieren.

Die in beiden Fallen der Regeneration des Partikelfilters 9 gegebene lokale Temperaturerhöhung an der Anströmseite 11 des Partikelfilters 9 wird durch das Filtermaterial relativ gut zur an der Abströmseite 12 des Partikelfilters 9 angeordneten Beladung mit dem SCR-aktiven Katalysatormaterial 14 abgeschirmt, so dass eine Schädigung des SCR-aktiven Katalysatormaterials nicht zu befürchten ist. Um bei kritischen Temperaturverhältnissen eine Schädigung des SCR-aktiven Katalysatormaterials sicher auszuschließen, können an Stelle des temperaturempfindlicheren Vanadiums bzw. V₂O₅ auch WO₃/TiO₂ oder eisenhaltige, kupferhaltige oder kobalthaltige Zeolithe als Katalysatormaterial eingesetzt werden.

Aus Gründen der thermischen Stabilität kann es weiter vorteilhaft sein, wenn die Beladung der SCR-aktiven Seite des Partikelfilters in Strömungsrichtung des Abgases ansteigt. Dies lässt sich entweder dadurch erreichen, dass der Partikelfilter in Schichten aufgebaut ist, wobei die Beladung der Schichten mit SCR-aktiven Material in Strömungsrichtung des Abgases zunimmt, oder dadurch, dass die Beladung mit dem SCR-aktiven Material durch Beschichten oder Imprägnieren der Abströmseite des Partikelfilters so vorgenommen wird, dass der Grad der Beladung des Filtermaterials mit steigender Eindringtiefe der Beschichtungs- oder Imprägnierlösung abnimmt.

Um bei instationärem Betrieb der Brennkraftmaschine, wie es bei in Fahrzeugen betriebenen Brennkraftmaschinen der Normalfall ist, einen möglichst hohen Umsatz an Stickoxiden zu Stickstoff und Wasserdampf zu erhalten, ist es notwendig, das Abgasnachbehandlungssystem mit leichten Ammoniaküberschuss zu betreiben. Da das giftige Ammoniak-Gas nicht an die Außenluft abgegeben werden darf, besteht die Notwendigkeit, am Ende der Abgasnachbehandlungsanordnung einen Ammoniak-Oxidationskatalysator vorzusehen. Eine solche Anordnung ist in Fig. 3 schematisch dargestellt. Auch hier ist eine Schnittdarstellung gewählt, deren Schnittebene parallel zur Strömungsrichtung des Abgases verläuft. Nachdem die Darstellung in Figur 3 in weiten Teilen gleich ist zu der in Figur 2, wurden für gleiche Teile gleiche Bezugszeichen gewählt. Diese gleichen Teile werden, um Wiederholungen zu vermeiden, nicht nochmals beschrieben, es wird statt dessen auf die Beschreibung zur Figur 2 verwiesen.

Zur Oxidation des überschüssigen Ammoniaks im Abgas ist vorgesehen, auf der Abströmseite 12 des Partikelfilters 9, am Ausgang der sacklochartigen oder taschenförmigen Kammern 12a, entweder eine Imprägnierung des SCR-aktiven Katalysatormaterials 14 mit einem Material 15 zur Oxidation von Ammoniak vorzunehmen (in der Figur 3 unten) oder das SCR-aktive Katalysatormaterial 14 mit einem Material 15'zur Oxidation von Ammoniak zu beschichten (in Figur 3 oben). In beiden Fällen wird der überschüssige Ammoniak zuverlässig in Stickstoff und Wasserdampf übergeführt.

Herstellungsmöglichkeiten für den Grundkörper des Partikelfilters 3 sollen in Verbindung mit Figur 3 ebenfalls beispielhaft und prinzipiell aufgezeigt werden. Um eine sacklochartige Struktur zu erzeugen, kann entweder eine Vielzahl röhrenförmige Gebilde zu einer dichten Packung zusammengefasst werden, wobei jeweils benachbarte Röhren wechselseitig entweder auf der Anströmseite oder auf der Abströmseite verschlossen werden. Das Verschließen kann mit dem gleichen Material erfolgen, das auch für den Partikelfilter 9 verwendet wird, das Material kann aber auch unterschiedlich, z.B. neutral sein. Eine weitere Möglichkeit zur Erzeugung der sacklochartigen Kammern 11a, 12a besteht darin, in einem blockartigen Filterkörper Kanäle vorzusehen, von denen jeweils benachbarte wechselseitig an den jeweils gegenüberliegenden Enden verschlossen sind.

Die Beladung mit SCR-aktivem Katalysatormaterial kann bei den vorstehend angesprochenen Strukturen dadurch erfolgen, dass zunächst nur jede zweite Öffnung auf der Abströmseite 12 verschlossen wird und sodann der Filterkörper in eine Beschichtungs- oder Imprägnierlösung getaucht wird, wodurch die Beschichtungs- oder Imprägnierlösung in den zur Abströmseite hin offenen Kanälen aufsteigt. Die überschüssige Beschichtungs- oder Imprägnierlösung wird nach erfolgter Beschichtung oder Imprägnierung wieder ausgeblasen und die beschichteten oder imprägnierten Kanäle werden sodann zur Anströmseite 11 hin verschlossen.

Eine Möglichkeit taschenförmige Strukturen zu erzeugen besteht darin, Packungen von zueinander beabstandeten Platten anzufertigen, wobei die durch die Beabstandung entstandenen benachbarten Freiräume jeweils wechselseitig auf der Anströmseite 11 und der Abströmseite 12 verschlossen sind, so dass sich eine taschenförmige Struktur ausbildet. Die Beladung der Abströmseite 12 mit dem SCR-aktiven Katalysatormaterial 14 kann dadurch erfolgen, dass die für den Aufbau der Struktur verwendeten Platten einseitig mit SCR-aktivem Katalysatormaterial beladen sind und die Platten so geschichtet sind, das sich wechselseitig zwei beladene Plattenseiten und zwei nicht beladene Plattenseiten gegenüber stehen. Die Beladung der Platten kann dabei so erfolgen, dass die Platten in Schichten aufgebaut sind, wobei der Grad der Beladung der Schichten mit SCR-aktivem Katalysatormaterial in Richtung Abströmseite zunimmt. Es besteht aber auch die Möglichkeit, die Beladung der Platten mit SCR-aktivem Katalysatormaterial durch Besprühen, oder Bestreichen mit SCR-aktiven Beschichtungs- oder Imprägnierlösungen zu realisieren. Das Erzeugen der weiter oben beschriebenen NH3-aktiven Schichten am Ausgang der Anordnung erfolgt analog. Gleiches trifft auch auf aktive Schichten des Partikelfilters 9 auf der Anströmseite 11 zu, wie sie nachfolgend in Verbindung mit Figur 4 beschrieben sind.

Wie bereits in Verbindung mit Figur 1 ausgeführt, kann es zur Verbesserung der Abspaltung von Ammoniak aus dem Reduktionsmittel - z.B. wässrige Harnstofflösung (AdBlue) - notwendig sein, einen die Abspaltung begünstigenden Katalysator einzusetzen, um die Bildung von Cyanursäure nach den Reaktionen (7) und (9) zu verhindern. Die Bildung von Cyanursäure ist deshalb problematisch, weil es dadurch zu einer Verblockung des Partikelfilters und damit nicht nur zum Ausfall des Abgasnachbehandlungssystems, sondern der Brennkraftmaschine kommen kann. Erzeugt wird der Katalysator zur Verbesserung der Abspaltung von Ammoniak aus dem Reduktionsmittel dadurch, dass, wie in Fig. 4 in Schnittdarstellung schematisch gezeigt, die Anströmseite des Partikelfilters 9 mit einem die Abspaltung begünstigenden Katalysatormaterial 16 beladen ist. Dafür in Frage kommende Materialien sind TiO₂ oder TiO₂/SiO₂ oder TiO₂/SiO₂/Al₂O₃ sowie Zeolithe. Die Erzeugung einer entsprechenden Beladung erfolgt analog zu den oben beschriebenen Vorgehensweisen. Die übrige Darstellung in Figur 4 entspricht der in Figur 2 gezeigten, sodass auf eine nochmalige Beschreibung verzichtet werden kann, es wird auf die entsprechenden Beschreibungsteile zu Figur 2 verwiesen.

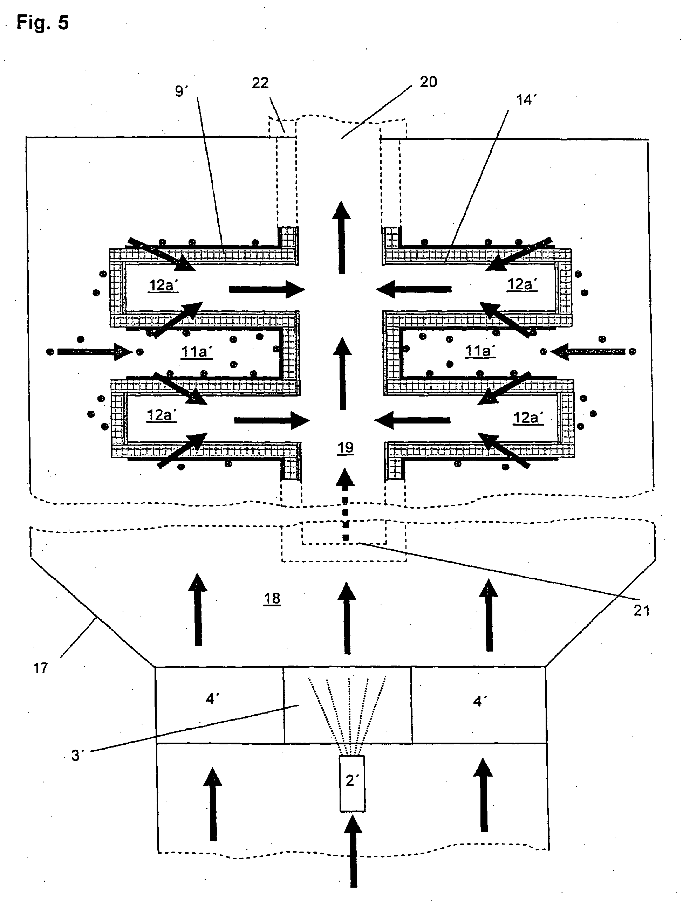

Eine weitere Ausführungsform des erfindungsgemäßen Abgasnachbehandlungssystems zeigt Fig. 5 schematisch in Schnittdarstellung. Weiter ist in Fig. 5 die Anordnung des Abgasnachbehandlungssystems in einem in den Abgastrakt einer Brennkraftmaschine integrierten Gehäuse angedeutet.

Ein ziehharmonikaförmig ausgebildeter Partikelfilter 9', der anströmseitige Taschen 11 a' und abströmseitige Taschen 12a' ausbildet, ist auf seiner den abströmseitigen Taschen 12a'zugewandten Seite, analog den Beispiel nach Figur 2, mit einem SCR-aktiven Katalysatormaterial 14' beladen. Durch die ziehharmonikaförmige Ausgestaltung des Partikelfilters 9' bildet sich ein Innenraum 19 aus, der an seinem einen Ende 21 verschlossen ist und an seinem anderen offenen Ende 20 an eine Abströmöffnung 22 eines Gehäuses 17 anschließt, in welchem der Partikelfilter 9' angeordnet ist. Der Innenraum des Gehäuses 17 wird durch den Partikelfilter 9' in zwei Bereiche aufgeteilt, den bereits erwähnten Innenraum 19 des Partikelfilters 9' und den zwischen der Wandung des Gehäuses 17 und dem Partikelfilter 9' liegenden Außenraum 18. Im Zuströmbereich des Außenraumes 18 ist ein Oxidationskatalysator 4' angeordnet, der Teile des im Abgasstrom enthaltenen Stickstoffmonoxids in Stickstoffdioxid überführt. Im Zentrum des Oxidationskatalysators 4' befindet sich eine Öffnung die einen Abgasteilstrom 3' ausbildet, in den mittels einer Düse 2' ein Reduktionsmittel zugeführt wird.

Wie in der Darstellung durch Pfeile die die Strömungsrichtung des Abgases angeben angedeutet, durchströmt das von der Brennkraftmaschine (nicht dargestellt) kommende Abgas zunächst den Oxidationskatalysator 4' und nimmt im parallel geführten Abgasteilstrom 3' das Reduktionsmittel, z. B. Ammoniak, auf. Sodann strömt das mit NH₃ beladene und mit NO₂ angereicherte Abgas vom Außenraum 18 über die anströmseitigen Taschen 11 a' durch den Partikelfilter 9'und seine mit SCR-aktivem Katalysatormaterial 14' beladene Abströmseite zu den abströmseitigen Taschen 12a' und verlässt über den sich anschließenden Innenraum 19 und die Abströmöffnung 22 die Anordnung. Auf seinem Weg durch den Partikelfilter 9' werden an dessen anströmseitiger Oberfläche die im Abgas enthaltenen Rußpartikel angelagert und durch das im Abgas angereicherte NO₂ kontinuierlich oxidiert. Die im Abgas mitgeführten Stickoxide werden zusammen mit dem ebenfalls enthaltenen Ammoniak beim Durchströmen der mit dem SCR-aktiven Katalysatormaterial 14' beladenen Teile des Partikelfilters 9' in Stickstoff und Wasserdampf übergeführt. Das so gereinigte Abgas verlässt über den Innenraum 19 und die Abströmöffnung 22 das Abgasnachbehandlungssystem. Hinsichtlich der vorstehend angesprochenen chemischen Reaktionen wird auf die bereits oben dargelegten formelmäßigen Zusammenhänge verwiesen.

## Patentansprüche

1. Abgasnachbehandlungssystem zur Stickoxid- und Partikelreduzierung bei mit Luftüberschuss betriebenen Brennkraftmaschinen, wobei die Stickoxidreduzierung mittels eines SCR-Katalysators und die Partikelreduktion mittels eines Partikelfilters erfolgt und wobei
- im Abgasstrom der Brennkraftmaschine ein Partikelfilter (5, 9) angeordnet ist,
- der Partikelfilter (5, 9) ein Oberflächenpartikelfilter oder ein Tiefenfilter ist,
- der Partikelfilter (5, 9) auf seiner Abströmseite mit einem SCR-aktiven Katalysatormaterial (6, 14) beladen ist,
- die Zuführung eines ammoniakabspaltenden Reduktionsmittels oder von Ammoniak stromauf zum Partikelfilter (5, 9) erfolgt,
**dadurch gekennzeichnet, dass** die Beladung mit dem SCR-aktiven Katalysatormaterial (6, 14) auf der Abströmseite des Partikelfilters in Strömungsrichtung das Abgases zunimmt.

2. Abgasnachbehandlungssystem nach Anspruch 1, **dadurch gekennzeichnet, dass** der Partikelfilter (5, 9) aus Cordierit oder Siliziumcarbid oder Sintermetall oder keramischen Fasern oder Silikatfasern oder Metallgestrick besteht und mit einem SCR-aktiven Katalysatormaterial beschichtet oder imprägniert ist.

3. Abgasnachbehandlungssystem nach einem der vorhergehenden Ansprüche, **dadurch gekennzeichnet, dass** das SCR-aktive Katalysatormaterial (6, 14) als Aktivkomponente Vanadium und/oder V₂O₅ und/oder WO₃/TiO₂ und/oder eisenhaltige Zeolithe und/oder kupferhaltige Zeolithe und/oder kobalthaltige Zeolithe enthält.

4. Abgasnachbehandlungssystem nach einem der vorhergehenden Ansprüche, **dadurch gekennzeichnet, dass** der Partikelfilter (5, 9) zusätzlich auf der Anströmseite mit einem Katalysatormaterial beschichtet oder imprägniert ist, das die Abspaltung des Ammoniak aus dem Reduktionsmittel begünstigt.

5. Abgasnachbehandlungssystem nach Anspruch 4, **dadurch gekennzeichnet, dass** das Katalysatormaterial, das die Abspaltung des Ammoniak aus dem Reduktionsmittel begünstigt, als Aktivkomponente TiO₂ und/oder TiO₂/SiO₂ und/oder TiO₂/SiO₂/Al₂O₃ und/oder Zeolithe enthält.

6. Abgasnachbehandlungssystem nach einem der vorhergehenden Ansprüche, **dadurch gekennzeichnet, dass** der Partikelfilter (5, 9) zusätzlich auf der Abströmseite, in Strömungsrichtung des Abgases gesehen am Ende der Beladung mit SCR-aktivem Katalysatormaterial (6, 14), mit einem Katalysatormaterial beschichtet oder imprägniert ist, das im Abgas vorhandenen überschüssigen Ammoniak oxidiert.

7. Abgasnachbehandlungssystem nach Anspruch 6, **dadurch gekennzeichnet, dass** das Katalysatormaterial zur Oxidation von überschüssigem Ammoniak Elemente der Platingruppe und/ oder deren Oxide und/ oder Zeolithe enthält.

8. Abgasnachbehandlungssystem nach einem der vorhergehenden Ansprüche, **dadurch gekennzeichnet, dass** stromauf zur Zuführung des Reduktionsmittels ein Oxidationskatalysator (4) angeordnet ist, der zumindest einen Teil des im Abgasstrom enthaltenen Stickstoffmonoxids in Stickstoffdioxid überführt.

9. Abgasnachbehandlungssystem nach Anspruch 8, **dadurch gekennzeichnet, dass** der Oxidationskatalysator (4) zur Überführung von Stickstoffmonoxid in Stickstoffdioxid als Aktivmaterial Platin und/ oder Platinoxid und/ oder Zeolithe enthält.

10. Abgasnachbehandlungssystem nach einem der vorhergehenden Ansprüche, **dadurch gekennzeichnet, dass** der Partikelfilter (5, 9) sowohl auf seiner Anströmseite als auch auf seiner Abströmseite sacklochartige oder taschenförmige Kammern (12) ausbildet, wobei die auf der Anströmseite gelegenen zur Anströmseite hin und die auf der Abströmseite gelegenen zur Abströmseite hin offen sind.

## Claims

1. An exhaust aftertreatment system for reducing nitrogen oxides and particles in internal combustion engines operated with an excess of air, the nitrogen oxide reduction taking place by means of an SCR catalyst and the particle reduction by means of a particle filter, and
- a particle filter (5, 9) being arranged in the exhaust stream of the internal combustion engine,
- the particle filter (5, 9) being a surface particle filter or a depth filter,
- the particle filter (5, 9) being laden on its outflow side with an SCR-active catalyst material (6, 14),
- a reducing agent which splits off ammonia or ammonia being supplied upstream of the particle filter (5, 9),
**characterised in that** the loading with the SCR-active catalyst material (6, 14) on the outflow side of the particle filter increases in the direction of flow of the exhaust.

2. An exhaust aftertreatment system according to Claim 1, **characterised in that** the particle filter (5, 9) consists of cordierite or silicon carbide or sintered metal or ceramic fibres or silicate fibres or wire mesh and is coated or impregnated with an SCR-active catalyst material.

3. An exhaust aftertreatment system according to one of the preceding claims, **characterised in that** the SCR-active catalyst material (6, 14) contains vanadium and/or V₂O₅ and/or WO₃/TiO₂ and/or iron-containing zeolites and/or copper-containing zeolites and/or cobalt-containing zeolites as active constituent.

4. An exhaust aftertreatment system according to one of the preceding claims, **characterised in that** the particle filter (5, 9) is additionally coated or impregnated on the inflow side with a catalyst material which promotes the splitting-off of ammonia from the reducing agent.

5. An exhaust aftertreatment system according to Claim 4, **characterised in that** the catalyst material which promotes the splitting-off of ammonia from the reducing agent contains TiO₂ and/or TiO₂/SiO₂ and/or TiO₂/SiO₂/Al₂O₃ and/or zeolites as active constituent.

6. An exhaust aftertreatment system according to one of the preceding claims, **characterised in that** the particle filter (5, 9), at the end of the loading with SCR-active catalyst material (6, 14), is additionally coated or impregnated on the outflow side, viewed in the direction of flow of the exhaust, with a catalyst material which oxidises excess ammonia present in the exhaust.

7. An exhaust aftertreatment system according to Claim 6, **characterised in that** the catalyst material for the oxidation of excess ammonia contains elements of the platinum group and/or oxides and/or zeolites thereof.

8. An exhaust aftertreatment system according to one of the preceding claims, **characterised in that** an oxidation catalyst (4) is arranged upstream of the supply of the reducing agent, which catalyst converts at least a portion of the nitrogen monoxide contained in the exhaust stream into nitrogen dioxide.

9. An exhaust aftertreatment system according to Claim 8, **characterised in that** the oxidation catalyst (4) for converting nitrogen monoxide into nitrogen dioxide contains platinum and/or platinum oxide and/or zeolites as active material.

10. An exhaust aftertreatment system according to one of the preceding claims, **characterised in that** the particle filter (5, 9) both on its inflow side and on its outflow side forms blind-hole-like or pocket-like chambers (12), those located on the inflow side being open towards the inflow side and those located on the outflow side being open towards the outflow side.

## Revendications

1. Système de traitement des gaz d'échappement pour réduire la teneur en oxydes d'azote et en particules, dans les moteurs à combustion fonctionnant avec un excédent d'air,
la réduction des oxydes d'azote se faisant à l'aide d'un catalyseur SCR et la réduction des particules se faisant à l'aide d'un filtre à particules, et
- un filtre à particules (5, 9) est installé dans la veine des gaz d'échappement du moteur à combustion,
- le filtre à particules (5, 9) est un filtre à particules en surface ou en profondeur,
- le filtre à particules (5, 9) est chargé sur son côté aval d'une matière de catalyseur (6, 14) ayant une activité SCR,
- le filtre à particules (5, 9) reçoit de l'ammoniac ou un agent dégageant de l'ammoniac en amont du filtre à particules (5, 9),
**caractérisé en ce que**
la charge en agent catalyseur (6, 14) à activité SCR augmente du côté aval du filtre à particules dans le sens de passage des gaz d'échappement.

2. Système de traitement des gaz d'échappement selon la revendication 1,
**caractérisé en ce que**
le filtre à particules (5, 9) est en cordiérite ou en carbure de silicium ou en un métal fritté ou en fibres céramiques ou en fibres de silicate ou en un tissu métallique et il est revêtu ou imprégné d'un matériau de catalyseur ayant une activité SCR.

3. Système de traitement des gaz d'échappement selon l'une des revendications précédentes,
**caractérisé en ce que**
le matériau de catalyseur ayant une activité SCR (6, 14) contient comme composant actif, du vanadium et/ou V₂O₅ et/ou WO₃/TiO₂ et/ou une zéolithe contenant du fer et/ou une zéolithe contenant du cuivre et/ou une zéolithe contenant du cobalt.

4. Système de traitement des gaz d'échappement selon l'une des revendications précédentes,
**caractérisé en ce que**
le filtre à particules (5, 9) est en outre revêtu ou imprégné d'un matériau de catalyseur sur sa face amont et il favorise la séparation de l'ammoniac à partir de l'agent réducteur.

5. Système de traitement des gaz d'échappement selon la revendication 4,
**caractérisé en ce que**
le matériau catalyseur qui favorise la séparation de l'ammoniac à partir de l'agent réducteur contient comme composant actif TiO₂ et/ou TiO₂/SiO₂ et/ou TiO₂/SiO₂/Al₂O₃ et/ou des zéolithes.

6. Système de traitement des gaz d'échappement selon l'une des revendications précédentes,
**caractérisé en ce que**
le filtre à particules (5, 9) est en outre revêtu ou imprégné de matériau de catalyseur (6, 14) ayant une activité SCR sur le côté aval à l'extrémité de la charge, selon le sens de passage des gaz d'échappement.

7. Système de traitement des gaz d'échappement selon la revendication 6,
**caractérisé en ce que**
le matériau de catalyseur contient des éléments du groupe du platine et/ou des oxydes de ces éléments et/ou des zéolithes pour oxyder l'ammoniac en excédent.

8. Système de traitement des gaz d'échappement selon l'une des revendications précédentes,
**caractérisé par**
un catalyseur d'oxydation (4), en amont de l'alimentation en agent réducteur, ce catalyseur transformant au moins une partie du monoxyde d'azote contenu dans la veine des gaz d'échappement, en dioxyde d'azote.

9. Système de traitement des gaz d'échappement selon la revendication 8,
**caractérisé en ce que**
le catalyseur d'oxydation (4) contient comme matériau actif, du platine et/ou de l'oxyde de platine et/ou des zéolithes pour transformer le monoxyde d'azote en dioxyde d'azote.

10. Système de traitement des gaz d'échappement selon l'une des revendications précédentes,
**caractérisé en ce que**
le filtre à particules (5, 9) est réalisé avec des chambres (12) en forme de trous borgnes ou en forme de poches à la fois sur sa face amont et sur sa face aval, et les chambres du côté amont sont ouvertes vers le côté aval et les chambres du côté aval sont ouvertes vers le côté amont.
